# EUROPÄISCHE PATENTSCHRIFT

(11) **EP 1 930 688 B1**
(45) Veröffentlichungstag und Bekanntmachung des Hinweises auf die Patenterteilung: **10.12.2014**
(21) Anmeldenummer: 07118981.5
(22) Anmeldetag: 22.10.2007
(51) Int. Cl.: G01B 11/275

(54) **Verfahren zur optischen Fahrwerksvermessung**
Method for optical chassis measurement
Procédé de mesure optique du mécanisme de déplacement

(30) Priorität: 08.12.2006 DE 102006058383
(43) Veröffentlichungstag der Anmeldung: 11.06.2008
(73) Patentinhaber: ROBERT BOSCH GMBH, 70442 Stuttgart (DE)
(72) Erfinder: Nobis, Guenter, 72622, Nuertingen (DE); Uffenkamp, Volker, 71642, Ludwigsburg (DE)

(56) Entgegenhaltungen:
- WO-A-98/12503
- DE-A1- 19 757 763
- DE-A1- 19 934 864
- US-A1- 2006 152 711

## Beschreibung

### Stand der Technik

Die Erfindung bezieht sich auf ein Verfahren zur optischen Fahrwerksvermessung von Kraftfahrzeugen mittels einer mindestens eine Messeinrichtung aufweisenden Messanordnung, bei dem mit einer oder mehreren in Position und Lage einander zugeordneten, die Oberflächengeometrie eines Fahrzeugs oder am Fahrzeug angeordnete Messpunkte erfassenden Bildaufnahmeeinrichtungen eine Referenzierung und/oder Orientierung der mindestens einen Messeinrichtung bezüglich des Messplatzes mit Hilfe von am Messplatz unter bestimmten Messplatzkoordinaten angeordneten Bezugsmerkmalen vorgenommen und in einer Auswerteeinrichtung auf der Basis der gewonnenen Orientierungsdaten und/oder Zuordnungsdaten sowie der bei der Durchführung der Achsvermessung gewonnenen Messdaten eine Auswertung zum Bestimmen von Fahrwerksdaten erfolgt, sowie auf eine Vorrichtung zur Durchführung des Verfahrens.

Ein Verfahren und eine Vorrichtung dieser Art sind in der DE 197 57 763 und auch in der EP 1 042 643 B 1 angegeben. Bei diesen bekannten Verfahren bzw. Vorrichtungen werden mit Hilfe von Kameras, einem Referenz-Koordinatensystem am Messplatz und optischen Merkmalen (beispielsweise retroreflektierenden Marken) am Fahrzeugrad und an der Karosserie die Fahrachse und weiterhin Rad- und Achsgeometriedaten ermittelt. Gemäß der DE 197 57 763 erfolgt die Messung im Stand des Fahrzeugs, z.B. auf einer Arbeitsgrube oder einer Hebebühne, während die EP 1 042 643 B1 ein Verfahren beschreibt, in welchem das Fahrzeug an der Messeinrichtung vorbeifährt. Beide Verfahren erfassen gleichzeitig das Fahrzeug und eine Bezugsmerkmalsanordnung mit mehreren Bezugsmerkmalen zur Referenzierung und/oder Orientierung der Messeinrichtung des Systems zum Messplatz.

Die hochgenaue Bestimmung der Rad- und Achsgeometrie von Fahrzeugen gewinnt durch die zunehmend technisch verbesserten Fahrwerke immer mehr an Bedeutung. Neue und feiner abgestimmte Möglichkeiten zur Einstellung von Spur und Sturz der Einzelräder verlangen eine Messeinrichtung mit entsprechend hoher Genauigkeit. Die Referenzierung und Orientierung der Messeinrichtung zum Messplatz sind dabei von entscheidender Bedeutung.

In der deutschen Patentanmeldung DE 10 2005 063 051, in der noch weitere derartige Verfahren und Vorrichtungen nach dem Stand der Technik angeführt sind, sind Möglichkeiten der Ausgestaltung und Anwendung der Referenzierung mittels einer Bezugsmerkmalsanordnung während der Fahrwerksvermessung genannt.

In den vorstehend genannten Druckschriften wird vorausgesetzt, dass die 3D-Koordinaten der Bezugsmerkmale in einem gemeinsamen Koordinatensystem, dem Messplatzsystem, der Auswerteeinheit bekannt sein müssen. Es sind jedoch keine Hinweise gegeben, wie die Koordinaten bestimmt werden.

Weiterhin ist aus US 2006/0152711 A1 ein Verfahren und eine Vorrichtung zur optischen Fahrwerksvermessung von Kraftfahrzeugen mit vier Messeinrichtungen bekannt, die aus verschiedenen Blickwinkeln zu vermessende Objekte am Kraftfahrzeug aufnehmen. Eine angeschlossene Auswerteeinheit ermittelt aus den aufgenommenen Bildern die Raumlage von Messpunkten am Kraftfahrzeug. Zur Bestimmung der Messplatzkoordinaten sind Gitternetzlinien auf einer Aufstandsfläche des Kraftfahrzeugs als Referenzmerkmale vorgesehen. Zusätzlich zu den Referenzmerkmalen ist eine mobile Prüfmerkmalanordnung mit Prüfmerkmalen in Form eines Würfels vorhanden. Die Referenzmerkmale und die Prüfmerkmale werden von den Messeinrichtungen aufgenommen und zur Kalibrierung des Messplatzbezugssystems herangezogen.

### Offenbarung der Erfindung

Der Erfindung liegt die Aufgabe zugrunde, ein Verfahren bzw. eine Vorrichtung zur optischen Fahrwerksvermessung von Kraftfahrzeugen bereit zu stellen, mit dem bzw. der mit möglichst wenig Aufwand eine möglichst genaue Referenzierung bzw. Orientierung sichergestellt wird.

Diese Aufgabe wird nach dem Anspruch 1 dadurch gelöst, dass die Messplatzkoordinaten der Bezugsmerkmale einmalig oder in zeitlichen Abständen mittels einer vorgegebenen Prüfmerkmalsanordnung am Messplatz vermessen werden, indem die Prüfmerkmalsanordnung sequentiell vermittels der mindestens einen Messeinrichtung aus mindestens zwei verschiedenen Perspektiven bildhaft erfasst wird, wobei sich in den Abbildungen mehrere oder alle der zu vermessenden Bezugsmerkmale befinden, deren Positionen in den mindestens zwei Beobachtungen die Eingangsdaten für ein mathematisches Gleichungssystem bilden, dessen Unbekannte mittels der Auswerteeinrichtung anhand eines Ausgleichsprozesses bestimmt werden.

Die Vorrichtung gemäß Anspruch 19 zur Durchführung des Verfahrens ist in der Weise ausgestaltet, dass zusätzlich eine Prüfmerkmalsanordnung vorgesehen ist, die einen Träger mit daran angeordneten Prüfmerkmalen umfasst und dass die Auswerteeinrichtung in der Weise ausgebildet ist, dass die Messplatzkoordinaten der Bezugsmerkmale auf der Basis der bildhaft aufgenommenen Prüfmerkmale und der zu vermessenden Bezugsmerkmale aus mindestens zwei verschiedenen Perspektiven bestimmbar sind. Dabei werden von der Messeinrichtung in jeweils einem Bild nur ein Teil oder alle Prüfmerkmale und gleichzeitig nur ein Teil oder alle Bezugsmerkmale bildhaft erfasst. Die Aufnahme der Bilder aus den mindestens zwei Perspektiven erfolgt sequentiell.

Bei dem erfindungsgemäßen Verfahren und bei der erfindungsgemäßen Vorrichtung wird die Kombination aus zumindest einem Teil der Prüfmerkmale und der betreffenden Bezugsmerkmale sequentiell erfasst, indem die mindestens eine Messeinrichtung in ihrer Position und/oder Ausrichtung mindestens einmal geändert wird und die mindestens eine weitere Erfassung aus anderer Perspektive erfolgt.

Mit diesen Maßnahmen wird eine präzise Bestimmung der 3D-Koordinaten von Bezugsmerkmalen (Referenzmerkmalen) eines Messplatzes bzw. Messraumes zur Referenzierung/Orientierung optischer Messeinrichtungen zum Vermessen der Rad- und/oder Achsgeometrie von Fahrzeugen unter Einsatz einer der optischen Messeinrichtungen der Messanordnung (des Messsystems) erreicht. Die im Oberbegriff des Anspruches 1 genannte bildhafte Erfassung der Oberflächengeometrie oder am Fahrzeug angeordneter Messpunkte bezieht sich auf alle Arten der optischen Achsvermessung, wie z.B. der markenbasierten oder markenlosen Achsvermessung, die mit mindestens einer Bildaufnahmeeinrichtung mit mindestens einer Kamera arbeiten.

Die 3D-Koordinaten (oder auch 2D-Koordinaten) der Bezugsmerkmale im Messplatzsystem werden bei der Erstinstallation benötigt, werden vorteilhaft aber auch einer periodischen Überprüfung zugrunde gelegt. Ebenso ist nach einem Erneuern von Bezugsmerkmalen z.B. nach Beschädigung oder Verlust eine erneute Bestimmung der Koordinaten erforderlich. Die Vermessung kann vom Servicepersonal oder von der Bedienperson, die auch die Fahrwerksvermessung durchführt, vorgenommen werden. Es bedarf keiner Vorkenntnisse.

Die Bestimmung der Messplatzkoordinaten der Bezugsmerkmale mit den genannten Maßnahmen ergibt eine hohe Genauigkeit, so dass dann auch die anschließende optische Achsvermessung mit hoher Genauigkeit durchgeführt werden kann. Dies gilt insbesondere für Messanordnungen mit mehr als einer Messeinrichtung, z .B. eine Messeinrichtung pro Fahrzeugseite oder eine pro Einzelrad, deren Messdaten getrennt erfasst werden, die Bestimmung von Fahrwerksdaten sich jedoch aus gemeinsamer Verrechnung der 3D-Daten der einzelnen Messeinheiten ergeben. Ferner gilt es für die Mobilität der mindestens einen Messeinrichtung bezüglich der Anordnung am Messplatz.

Das Verfahren bzw. die Vorrichtung gehen von folgenden Überlegungen aus: Eine Messplatzebene zur Achsmessung hat in etwa eine Ausdehnung von 5,0 m x 2,5 m. Aus Gründen der Genauigkeit und Sichtbarkeit der Einzelräder werden in der Regel entweder je eine Messeinrichtung je Fahrzeugseite oder je eine Messeinrichtung je Einzelrad eingesetzt, die jeweils nur einen entsprechenden Ausschnitt des Fahrzeugs erfassen. Da sich die Objektausschnitte nicht oder nur wenig überdecken, benötigt jede Messeinrichtung mindestens drei Bezugsmerkmale im eigenen Sichtbereich. Erschwerend kann hinzukommen, dass die Merkmale als ebene Merkmale mit Normalenrichtung in Aufnahmerichtung der Messeinrichtung ausgeführt sind, so dass sie von gegenüberliegenden Messeinrichtungen nicht eingesehen werden können. Auch Verdeckungen durch das Fahrzeug oder die Hebebühne können eine gemeinsame Erfassung erschweren. Die Ausdehnung der Bezugsmerkmale erstreckt sich somit auf die gesamte Messplatzgröße, wobei sie oftmals nur dort angebracht werden, wo sich die Messeinrichtungen befinden, also z.B. in der Nähe der vier Ecken des Messplatzes bei einem System mit einer Messeinrichtung für jedes Einzelrad.

Ein Vorteil der Erfindung liegt darin, mittels mindestens einer Messeinrichtung mit mindestens einer Kamera des Messsystems, welches einen nur sehr geringen Objektausschnitt erfasst, 3D-Koordinaten der oben genannten Ausdehnung (oder auch größer) in einem gemeinsamen Messplatz-Koordinatensystem zu bestimmen, wobei insbesondere eine Verknüpfung von weit entfernten und von gegenüberliegenden Merkmalen einfach gelöst wird.

Die Bedienung bei der Bestimmung der Messplatzkoordinaten der Bezugsmerkmale wird dadurch begünstigt, dass die Prüfmerkmale der Prüfmerkmalsanordnung in definierter räumlicher Lage an einem mobilen oder ortsfesten Träger gehalten werden und die Prüfmerkmalsanordnung bzw. der mindestens eine Träger zumindest während der Durchführung des Verfahrens ortsfest gehalten werden.

Vorteile bei der Bedienung und Auswertung werden auch dadurch erreicht, dass die Prüfmerkmale und/oder die Bezugsmerkmale anhand einer zugeordneten Codierung von der Auswerteeinheit automatisch identifiziert werden.

Zur einfachen Bedienung und Messung tragen ferner die Maßnahmen bei, dass Prüfmerkmale von zwei sich gegenüberliegenden Seiten erfasst werden, wobei mindestens drei der Prüfmerkmale beider Seiten eindeutig miteinander verknüpft sind.

Die Genauigkeit kann dadurch gesteigert werden, dass geometrische Informationen der Prüfmerkmale hinsichtlich Gestalt, Koordinatensystem und/oder gegenseitigem Abstand der Auswerteeinheit bekannt sind und zusätzlich in den Ausgleichungsprozess einbezogen werden.

Zur Genauigkeit der Bestimmung der 3D-Koordinaten der Bezugsmerkmale tragen die Maßnahmen bei, dass im Ausgleichsprozess weitere Parameter mitbestimmt werden, wie z.B. die Kameraparameter oder die Parameter der gegenseitigen Zuordnung mehrerer Bildaufnahmeeinheiten einer Messeinrichtung.

Vorteile ergeben sich auch dadurch, dass die Prüfmerkmalsanordnung bei einer Messanordnung mit einer Messeinrichtung pro Rad oder pro Fahrzeugseite zur Verknüpfung der Bezugsmerkmale einer Seite von vorn nach hinten und/oder von einer Fahrzeugseite zur anderen herangezogen wird.

Wenn durch praktische Gegebenheiten nicht alle Bezugsmerkmale und Prüfmerkmale in zwei Bildern unterschiedlicher Perspektive gleichzeitig erfasst werden, tragen zur vollständigen Erfassung und Erreichung der Genauigkeit die Maßnahmen bei, dass die Erfassung aus mehr als zwei Perspektiven gewählt wird, so dass sich ein Bildverbund mit sich überdeckenden Bildern ergibt, in denen letztendlich alle Bezugsmerkmale und Prüfmerkmale abgebildet werden, und ferner die Maßnahmen, dass die Bilder aus Perspektiven mit gleicher oder variierter Schrittweite aufgenommen und in einem gemeinsamen Prozess ausgewertet werden.

Verschiedene vorteilhafte Ausgestaltungsmöglichkeiten bestehen darin, dass die sequentielle Erfassung bei schrittweiser oder kontinuierlicher Positions- und/oder Richtungsänderung der Messeinrichtung durchgeführt wird und dass die dabei gewonnenen Bilddaten entweder vollständig ausgewertet oder vom System in Abhängigkeit der zu gewährleistenden Genauigkeit vor der Auswertung reduziert werden.

Durch die Maßnahmen, dass die Erfassung der Bilder automatisch oder unter Auslösung durch eine Bedienperson erfolgt, werden unterschiedliche Bedienungsmöglichkeiten geboten.

Eine weitere vorteilhafte Ausgestaltung, die zur sicheren Erkennung der Prüfmerkmale und Bezugsmerkmale beiträgt, besteht darin, dass mehrere Bilder aus gleicher oder unterschiedlicher Perspektive bei verschiedenen Beleuchtungsverhältnissen, insbesondere Beleuchtungsstärke, aufgenommen werden.

Die Genauigkeit beim Bestimmen der Bezugsmerkmalskoordinaten wird auch dadurch begünstigt, dass die Bildkoordinaten der Prüfmerkmale und/oder der Bezugsmerkmale nach mehrmaliger Erfassung aus einer Perspektive gemittelt werden.

Verschiedene Ausgestaltungsmöglichkeiten zur sicheren Erkennung der Prüfmerkmale bestehen darin, dass die Prüfmerkmale reflektierend oder selbstleuchtend ausgebildet sind.

Zur einfachen Bedienung tragen die Maßnahmen bei, dass die Bedienperson mittels der Auswerteeinrichtung bei der Bedienung visuell und/oder akustisch unterstützt wird.

Eine vorteilhafte Maßnahme zum Bestimmen der Messplatzkoordinaten besteht ferner darin, dass die erfassten Bilder zum Bestimmen der Messplatzkoordinaten der Bezugsmerkmale nach einem statistischen Ausgleichsverfahren ausgewertet werden.

Ist des Weiteren vorgesehen, dass nach Bestimmung der Messplatzkoordinaten der Bezugsmerkmale diese mittels der Auswerteeinrichtung einer Plausibilitätsprüfung unterzogen und die ermittelten Prüfplatzkoordinaten erst dann als Grundlage für die Fahrwerksvermessung übernommen werden, wenn die der Plausibilitätsprüfung zugrunde gelegten Kriterien als zutreffend festgestellt werden, so wird die Zuverlässigkeit der Messungen weiterhin unterstützt.

### Kurze Beschreibung der Zeichnungen

Die Erfindung wird nachfolgend anhand von Ausführungsbeispielen unter Bezugnahme auf die Zeichnungen näher erläutert. Es zeigen:
- Fig. 1: eine Merkmalsanordnung mit Bezugsmerkmalen und Prüfmerkmalen auf einem Messplatz in perspektivischer Ansicht und
- Fig. 2: eine Messeinrichtung in perspektivischer Darstellung.

### Ausführungsformen der Erfindung

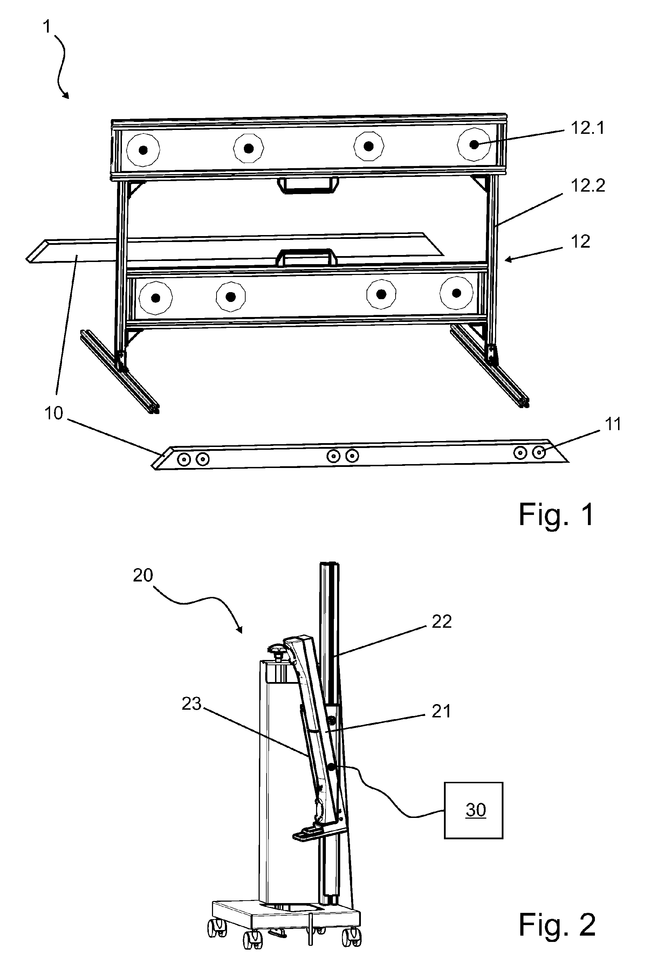

Fig. 1 zeigt eine auf einem Messplatz 1 für eine Fahrwerksvermessung eines Kraftfahrzeuges an beiden Seiten des Messplatzes positionierte oder zu positionierende Bezugsmerkmalsanordnungen 10 mit an einer Haltevorrichtung angebrachten Bezugsmerkmalen 11 und einer Prüfmerkmalsanordnung 12, die an einem nachfolgend als Träger 12.2 bezeichneten Gestell angeordnete Prüfmerkmale 12.1 aufweist. Die Bezugsmerkmale 11 können beispielsweise an einem seitlichen Begrenzungsteil einer Hebebühne angebracht sein. Die Merkmalsanordnung 10 kann auf dem Messplatz z.B. zwei oder drei derartige Träger entsprechend der Größe des Messplatzes umfassen.

Fig. 2 zeigt eine Messeinrichtung 20 mit einer Messeinheit 23, die an einer Höhenverstellung 22 höhenverstellbar und an einer Neigungsverstellung 21 neigungsverstellbar gelagert ist. Die Messeinrichtung 20 weist mindestens eine Bildaufnahmeeinrichtung auf, mit der der betreffende Ausschnitt des Messplatzes 1 gegebenenfalls mit dem Fahrzeug und daran angebrachten Merkmalen, wie z.B. Rad- und/oder Karosseriemerkmalen, bildhaft erfasst wird, und ist mit einer Auswerteeinrichtung 30 für die Verarbeitung von Bilddaten und für die Bestimmung der Messlatzkoordinaten der zu vermessenden Bezugsmerkmale gekoppelt. Diese Auswerteeinrichtung kann außerdem für die Auswertung und Bereitstellung der Messergebnisse für die Fahrwerksvermessung benutzt werden. Bezüglich der Durchführung der Fahrwerksvermessung sei auf die eingangs genannten Druckschriften verwiesen. Nachfolgend wird die Bestimmung der Messplatzkoordinaten der Bezugsmerkmale näher erläutert.

Der Träger 12.2 weist als Prüfmerkmale 12.1 vorzugsweise Merkmale wie z.B. 2D-Flächen oder 3D-Körper mit bekannter Geometrie, etwa in Form einer jeweiligen Marke als Kreis, Dreieck, Rechteck, Kugel, Würfel, Quader oder dgl. auf, die einen guten Kontrast zu ihrer Umgebung gegebenenfalls unter Ausnutzung besonderer Beleuchtungsverhältnisse besitzen und insbesondere als künstliche, vorzugsweise retroreflektierende Merkmale ausgebildet sind. Derart ausgebildete Merkmale bieten den Vorteil, dass sie besonders einfach im Bild detektiert werden können und durch ihre bekannte Geometrie eine hohe Messgenauigkeit erreicht werden kann. Den Prüfmerkmalen 12.1 und auch den Bezugsmerkmalen 11 kann eine Codierung zugeordnet sein, um ihre Identifikation zu vereinfachen.

Im Gegensatz zu 3D-Merkmalen sind ebene Merkmale nicht aus allen Aufnahmerichtungen erfassbar. Deshalb ist es bei Verwendung ebener Merkmale zweckmäßig, Merkmale auf beiden Seiten des Trägers bzw. Punktrahmens 12.2 anzubringen und gegebenenfalls eine Verknüpfung der beiden Seiten des Trägers 12.2 z.B. durch mindestens drei Passbohrungen herzustellen, die nicht auf einer Geraden liegen.

Alternativ können als Prüfmerkmale 12.1 (und gegebenenfalls Bezugsmerkmale 11) räumliche Merkmale wie z.B. Kugeln, die von beiden Seiten sichtbar sind, am Träger 12.2 angeordnet sein. Auch eine Kombination von ebenen und räumlich ausgeprägten Merkmalen ist möglich.

Als Merkmale können auch ohnehin vorhandene, natürliche Merkmale herangezogen werden, z.B. Kanten oder zufällige Kontrastmuster, die sich aus einer Textur des Rahmens ergeben. Eine Kombination von natürlichen und künstlichen Merkmalen ist ebenfalls möglich.

Weiterhin können geometrische Informationen der Prüfmerkmale auf dem Träger 12.2 bekannt sein und in der Auswerteeinrichtung 30 zugrunde gelegt werden, wie z.B. der Abstand zwischen Prüfmerkmalen oder die Koordinaten der Prüfmerkmale in einem lokalen 2D- oder 3D-Koordinatensystem zumindest eines Teils der Prüfmerkmalsanordnung. Wenn vorhanden, werden diese Informationen bei der rechnerischen Auswertung mit der Auswerteeinrichtung 30, insbesondere in einen Ausgleichungsprozess mit entsprechenden Toleranzen eingeführt.

Der mindestens eine Träger 12.2 wird zumindest für die Dauer der Bestimmung der 3D-Koordinaten der Bezugsmerkmale ortsfest aufgestellt sein. Er wird so platziert, dass aus mindestens zwei Perspektiven zumindest ein Teil der zu bestimmenden Bezugsmerkmale gemeinsam mit mindestens einem Teil der Punktmerkmale 12.1 abgebildet werden. Der Träger 12.2 darf nicht bewegt werden, solange bis alle notwendigen bzw. einzustellenden Perspektiven erfasst wurden. Eine 3-Punkt-Auflage oder eine verwindungsweiche Konstruktion der Auflageelemente bei einer 4- oder Mehr-Punkt-Auflage gewährleistet eine kippfreie Aufstellung.

Der Träger 12.2 dient neben der Verknüpfung der Seitenreferenzen von vorn nach hinten und von links nach rechts (beispielsweise bezogen auf ein System mit einer Messeinrichtung 20 pro Rad) zur besseren Ausnutzung des Bildformats und damit zur Steigerung der Genauigkeit. Die Erfassung der Merkmale (Bezugsmerkmale 11 und Prüfmerkmale 12.1 auf dem Träger 12.2) erfolgt sequentiell, indem die mindestens eine Messeinrichtung 20 mindestens eine Positionsänderung erfährt, aus der die mindestens zweite Aufnahme aus anderer Perspektive erfolgt.

Zweckmäßig, wegen des kleineren Objektausschnitts und der großen Objektausdehnung wird die mindestens eine Messeinrichtung 20 mehrfach neu positioniert, so dass sich ein Bildverbund mit mehreren, sich teilweise überdeckenden Bildern ergibt, in denen letztendlich alle Punkte aus mindestens zwei Perspektiven abgebildet wurden.

Bei einem sichtbaren Objektausschnitt der Messeinrichtung von etwa 1 m in der Längenausdehnung des Messplatzes von etwa 5 m ist es z.B. sinnvoll, die Erfassung vorn links bzw. vorn rechts zu beginnen, die Messeinrichtung jeweils um 0,25 m zu verschieben, um dann am hinteren Ende des Messplatzes 1 zu enden. Diese Bildsequenzen bzw. Scans können zur Steigerung der Genauigkeit mehrfach und mit variierenden Schrittweiten durchgeführt werden, und alle Bilder können in einem gemeinsamen Prozess ausgewertet werden. So können zusätzlich auch die Höhe und die Aufnahmerichtungen der Messeinrichtung verändert werden, insbesondere die horizontale Aufnahmerichtung und die vertikale Aufnahmerichtung (Neigung).

Vorteilhaft können Hilfsadapter mit vordefinierten Richtungen und Neigungen zum Einsatz kommen, die der Messeinrichtung 23 eine vordefinierte Höhe und Ausrichtung vorgeben, wodurch eine vom Bediener weitgehend unabhängige Genauigkeit gewährleistet wird.

Die Bildaufnahme kann kontinuierlich erfolgen. Die dabei entstehenden Bilddaten werden entweder vollständig ausgewertet oder vom Messsystem, insbesondere der Auswerteeinrichtung 30, reduziert auf die zur Gewährleistung der Genauigkeit notwendige Menge.

Alternativ erfolgt die Bildaufnahme anhand einer Auslösung durch die Bedienperson, wenn diese die Messeinrichtung in der nächsten Position und Ausrichtung platziert hat. Dadurch werden die Bilddaten auf die mindest notwendige Anzahl beschränkt.

Ist der Messabstand zwischen den Bezugsmerkmalen 11 und dem Träger 12.2 unterschiedlich, kann, insbesondere bei passiven Merkmalen, die z.B. durch ein Ringlicht der Messeinrichtung 20 beleuchtet werden, die Erfassung der Merkmale in jeder Position der Messeinrichtung mit variierender Beleuchtungsstärke vorgenommen werden, damit die Merkmale im Vordergrund und im Hintergrund optimal beleuchtet werden. Da es sich um statische Objekte handelt und unter Voraussetzung, dass die Messeinrichtung 20 während der Aufnahme in einer Position nicht bewegt wird, können die Bildkoordinaten der Merkmale auch gemittelt werden. Dieses Vorgehen mindert das Bildrauschen, wodurch ebenfalls eine Genauigkeitssteigerung erreicht wird. Alternativ sind aktiv lichtaussendende Merkmale einsetzbar.

Der Bediener kann bei der Bildaufnahme unterstützt werden. Es kann online am Monitor des Messsystems die aktuelle Position, Höhe, Richtung und Neigung angezeigt werden, errechnet aus der Auswertung der sichtbaren Punkte auf dem Punktrahmen 12.2. Damit kann die Bedienperson sehr einfach die Messeinrichtung 20 auf die nächste geforderte Aufnahmeposition bringen und das Messsystem kann die zur Gewährleistung der Genauigkeit notwendige Anzahl und Überdeckung der Aufnahmen einfordern. Auch kann eine interaktive Bedienerführung und -überwachung bezüglich der richtigen Verwendung des mindestens einen Hilfsadapters vom System ausgeführt werden.

Die Auswertung der Bilder erfolgt nach einem statistischen Ausgleichsverfahren, da den Unbekannten in der Regel eine Vielzahl von Beobachtungen gegenüberstehen, die sich aus dem Netz der Bildaufnahmen ergeben. Dabei können im Messsystem auch weitere Parameter mitbestimmt bzw. kalibriert werden, wie z.B. die Kameraparameter oder die Parameter der gegenseitigen Zuordnung der Bildaufnahmeeinheiten einer Messeinrichtung.

Bei der Bestimmung der Messplatzkoordinaten der Bezugsmerkmale wird der Träger 12.2 mit den Prüfmerkmalen 12.1 sequentiell mit der mindestens einen Messeinrichtung 20 aus mindestens zwei verschiedenen Perspektiven bildhaft erfasst. In den Abbildungen befinden sich ebenfalls die zu vermessenden Bezugsmerkmale 11. Die Positionen der Merkmale in den Bildern bilden die Beobachtungen in einem Gleichungssystem, dessen Unbekannte in der Regel durch Überbestimmung anhand des Ausgleichungsprozesses bestimmt werden.

Nach Bestimmung der gesuchten Messplatzkoordinaten der Bezugsmerkmale 11 können diese auf Plausibilität geprüft werden, wie z.B. Vollständigkeit und Abstand. Auch die erreichte Genauigkeit der Koordinaten in Form von Standardabweichungen aus der Auswertung des überbestimmten Systems kann zur Prüfung herangezogen werden. Nur wenn alle Kriterien positiv geprüft wurden, werden die Koordinaten in das Messsystem, insbesondere die Auswerteeinrichtung 30, übernommen. Dadurch wird die Korrektheit und Genauigkeit des Messsystems bei der Fahrwerksvermessung, beispielsweise Achsvermessung, auch bei Anwendung durch den NichtFachmann gewährleistet.

## Patentansprüche

1. Verfahren zur optischen Fahrwerksvermessung von Kraftfahrzeugen mittels einer mindestens eine Messeinrichtung (20) aufweisenden Messanordnung, bei dem mit einer oder mehreren in Position und Lage einander zugeordneten, die Oberflächengeometrie eines Fahrzeuges oder am Fahrzeug angeordnete Messpunkte erfassenden Bildaufnahmeeinrichtungen eine Referenzierung und/oder Orientierung der mindestens einen Messeinrichtung (20) bezüglich des Messplatzes mit Hilfe von am Messplatz (1) unter bestimmten Messplatzkoordinaten angeordneten oder vorhandenen Bezugsmerkmalen (11) vorgenommen wird und bei dem in einer Auswerteeinrichtung (30) auf der Basis der gewonnenen Orientierungsdaten und/oder Zuordnungsdaten sowie der bei der Durchführung der Achsvermessung gewonnenen Messdaten eine Auswertung zum Bestimmen von Fahrwerksdaten erfolgt, wobei die Messplatzkoordinaten der Bezugsmerkmale (11) einmalig oder in zeitlichen Abständen mittels einer vorgegebenen Prüfmerkmalsanordnung (12) mit Prüfmerkmale (12.1) am Messplatz (1) vermessen werden, indem die Prüfmerkmalsanordnung (12) vermittels der mindestens einen Messeinrichtung (20) aus mindestens zwei verschiedenen Perspektiven bildhaft erfasst wird, wobei sich in den Abbildungen zusätzlich die zu vermessenden Bezugsmerkmale (11) befinden, **dadurch gekennzeichnet, dass** die Kombination aus zumindest einem Teil der Prüfmerkmale (12.1) und der betreffenden Bezugsmerkmale (11) sequentiell erfasst wird, indem die mindestens eine Messeinrichtung (20) in ihrer Position und/oder Ausrichtung mindestens einmal geändert wird und die mindestens eine weitere Erfassung aus anderer Perspektive erfolgt, und dass die Positionen der mit der Messeinrichtung gemeinsam erfassten Prüfmerkmale (12.1) und Bezugsmerkmale (11) Beobachtungen in einem Gleichungssystem bilden, dessen Unbekannte mittels der Auswerteeinrichtung (30) anhand eines Ausgleichsprozesses bestimmt werden.

2. Verfahren nach Anspruch 1, **dadurch gekennzeichnet, dass** zumindest ein Teil der Prüfmerkmale (12.1) der Prüfmerkmalsanordnung (12) in definierter räumlicher Lage an einem lokalen 2D- oder 3D-Koordinatensystem an einem mobilen oder ortsfesten Träger (12.2) gehalten werden.

3. Verfahren nach Anspruch 1 oder 2, **dadurch gekennzeichnet, dass** die Prüfmerkmale (12.1) und/oder die Bezugsmerkmale (11) anhand einer zugeordneten Codierung identifiziert werden.

4. Verfahren nach einem der vorhergehenden Ansprüche, **dadurch gekennzeichnet, dass** Prüfmerkmale (12.1) von zwei sich gegenüberliegenden Seiten erfasst werden, wobei mindestens drei der Prüfmerkmale (12.1) beider Seiten eindeutig miteinander verknüpft sind.

5. Verfahren nach einem der vorhergehenden Ansprüche, **dadurch gekennzeichnet, dass** geometrische Informationen der Prüfmerkmale (12.1) hinsichtlich Gestalt, Koordinatensystem und/oder gegenseitigem Abstand zusätzlich in den Ausgleichungsprozess einbezogen werden.

6. Verfahren nach einem der vorhergehenden Ansprüche, **dadurch gekennzeichnet, dass** im Ausgleichungsprozess weitere Parameter mitbestimmt werden, wie z.B. die Kameraparameter oder die Parameter der gegenseitigen Zuordnung mehrerer Bildaufnahmeeinheiten einer Messeinrichtung.

7. Verfahren nach einem der vorhergehenden Ansprüche, **dadurch gekennzeichnet, dass** die Prüfmerkmalsanordnung (12) bei einer Messanordnung mit einer Messeinrichtung (20) pro Rad oder pro Fahrzeugseite zur Verknüpfung der Bezugsmerkmale (11) einer Seite von vorn nach hinten und/oder von einer Fahrzeugseite zur anderen herangezogen wird.

8. Verfahren nach einem der vorhergehenden Ansprüche, **dadurch gekennzeichnet, dass** die Erfassung aus den mindestens zwei Perspektiven so gewählt wird, dass sich ein Bildverbund mit mindestens zwei sich überdeckenden Bildern ergibt, in denen letztendlich alle erfassten Punkte aus mindestens zwei Perspektiven abgebildet werden.

9. Verfahren nach Anspruch 8, **dadurch gekennzeichnet, dass** ein Bildverbund mit mehreren Bildern aus unterschiedlichen Perspektiven mit gleicher oder variierter Schrittweite aufgenommen und in einem gemeinsamen Prozess ausgewertet werden.

10. Verfahren nach einem der vorhergehenden Ansprüche, **dadurch gekennzeichnet, dass** die sequentielle Erfassung bei schrittweiser oder kontinuierlicher Positions- und/oder Richtungsänderung der Messeinrichtung (20) durchgeführt wird und dass die dabei gewonnenen Bilddaten entweder vollständig ausgewertet oder vom Auswertesystem in Abhängigkeit der zu gewährleistenden Genauigkeit reduziert werden.

11. Verfahren nach einem der vorhergehenden Ansprüche, **dadurch gekennzeichnet, dass** die Erfassung der Bilder automatisch oder unter Auslösung durch eine Bedienperson erfolgt.

12. Verfahren nach einem der vorhergehenden Ansprüche, **dadurch gekennzeichnet, dass** mehrere Bilder aus gleicher oder unterschiedlicher Perspektive bei verschiedenen Beleuchtungsverhältnissen, insbesondere Beleuchtungsstärke, aufgenommen werden.

13. Verfahren nach Anspruch 12, **dadurch gekennzeichnet, dass** die Bildkoordinaten der Prüfmerkmale (12.1) und/oder der Bezugsmerkmale (12) nach mehrmaliger Erfassung aus einer Perspektive gemittelt werden.

14. Verfahren nach einem der vorhergehenden Ansprüche, **dadurch gekennzeichnet, dass** als Prüfmerkmale 2D-Flächen oder 3D-Körper mit bekannter Geometrie verwendet werden.

15. Verfahren nach einem der vorhergehenden Ansprüche, **dadurch gekennzeichnet, dass** die Prüfmerkmale (12.1) reflektierend oder selbstleuchtend ausgebildet sind.

16. Verfahren nach einem der vorhergehenden Ansprüche, **dadurch gekennzeichnet, dass** die Bedienperson mittels der Auswerteeinrichtung bei der Bedienung visuell und/oder akustisch unterstützt wird.

17. Verfahren nach einem der vorhergehenden Ansprüche, **dadurch gekennzeichnet, dass** die erfassten Bilder oder der erfasste Bildverbund zum Bestimmen der Messplatzkoordinaten der Bezugsmerkmale (11) nach einem statistischen Ausgleichsverfahren ausgewertet wird..

18. Verfahren nach einem der vorhergehenden Ansprüche,**dadurch gekennzeichnet, dass** nach Bestimmung der Messplatzkoordinaten der Bezugsmerkmale (11) diese mittels der Auswerteeinrichtung (30) einer Plausibilitätsprüfung unterzogen und die ermittelten Prüfplatzkoordinaten erst dann als Grundlage für die Fahrwerksvermessung übernommen werden, wenn die der Plausibilitätsprüfung zugrunde gelegten Kriterien als zutreffend festgestellt werden.

19. Vorrichtung zur Durchführung des Verfahrens nach einem oder mehreren der vorhergehenden Ansprüche mit einer mindestens eine Messeinrichtung (20) aufweisenden Messanordnung, die zur bildhaften Aufnahme der Oberflächengeometrie eines Fahrzeuges oder am Fahrzeug angeordneter Messpunkte eine oder mehrere in Position und Lage einander zugeordnete Bildaufnahmeeinrichtungen aufweist und zur Referenzierung und/oder Orientierung der mindestens einen Messeinrichtung (20) bezüglich des Messplatzes (1) Bezugsmerkmale (11) unter bestimmten Messplatzkoordinaten umfasst und die ferner eine Auswerteeinrichtung (30) umfasst, mit der auf der Basis gewonnener Orientierungsdaten und/oder Zuordnungsdaten sowie der bei der Durchführung der Achsvermessung gewonnenen Messdaten Fahrwerksdaten bestimmbar sind, wobei zusätzlich mindestens eine Prüfmerkmalsanordnung (12) vorgesehen ist, die einen Träger (12.2) mit daran angeordneten Prüfmerkmalen (12.1) umfasst, **dadurch gekennzeichnet, dass** der Träger (12.2) mit den Prüfmerkmalen (12.1) sequenziell von der mindestens einen Messeinrichtung (20) aus mindestens zwei Perspektiven bildhaft erfassbar ist, indem die mindestens eine Messeinrichtung (20) in ihrer Position und/oder Ausrichtung mindestens einmal geändert wird und die mindestens eine weitere Erfassung aus anderer Perspektive erfolgt, und dass die Auswerteeinrichtung (30) in der Weise ausgebildet ist, dass die Messplatzkoordinaten der Bezugsmerkmale (11) auf der Basis der aus mindestens zwei verschiedenen Perspektiven bildhaft gemeinsam aufgenommenen Prüfmerkmale (12.1) und der zu vermessenden Bezugsmerkmale (11) bestimmbar sind.

## Claims

1. Method for optical chassis measurement of motor vehicles by means of a measuring arrangement having at least one measuring device, in which one or more image pickup devices which are assigned to one another in position and attitude and acquire a surface geometry of a vehicle or measurement points arranged on the vehicle are used to undertake referencing and/or orientation of the at least one measuring device (20) with reference to the measuring site with the aid of reference features (11) arranged or present at the measuring site (1) at specific measuring site coordinates, and in which an evaluation for determining chassis data is performed in an evaluation device (30) on the basis of the obtained orientation data and/or assignment data and on the basis of the measured data obtained in carrying out the axle measurement, the measuring site coordinates of the reference features (11) being measured at the measuring site (1) once or at time intervals by means of a prescribed test feature arrangement (12) with test features (12.1), this being done by pictorial acquisition of the test feature arrangement (12) by means of the at least one measuring device (20) from at least two different perspectives, the reference features (11) to be measured additionally being present in the images, **characterized in that** the combination of at least a portion of the test features (12.1) and the relevant reference features (11) is acquired sequentially, this being done by changing at least once the position and/or alignment of the at least one measuring device (20) and performing the at least one further acquisition from another perspective, and **in that** the positions of the test features (12.1) and reference features (11) acquired jointly by the measuring device form observations in a system of equations whose unknowns are determined by means of the evaluation device (30) with the aid of a compensation process.

2. Method according to Claim 1, **characterized in that** at least a portion of the test features (12.1) of the test feature arrangement (12) is kept in a defined spatial position in a local 2D or 3D coordinate system on a mobile or stationary carrier (12.2).

3. Method according to Claim 1 or 2, **characterized in that** the test features (12.1) and/or the reference features (11) are identified with the aid of an assigned coding.

4. Method according to one of the preceding claims, **characterized in that** the test features (12.1) of two opposite sides are acquired, at least three of the test features (12.1) of the two sides being unambiguously interlinked.

5. Method according to one of the preceding claims, **characterized in that** geometric information concerning the test features (12.1) as regards shape, coordinate system and/or mutual spacing is additionally included in the compensation process.

6. Method according to one of the preceding claims, **characterized in that** further parameters are also determined in the compensation process, such as the camera parameters or the parameters of the mutual assignment of a plurality of image pickup units of a measuring device, for example.

7. Method according to one of the preceding claims, **characterized in that** given a measuring arrangement with a measuring device (20) per wheel or per vehicle side the test feature arrangement (12) is used to interlink the reference features (11) of one side from front to rear, and/or from one vehicle side to the other.

8. Method according to one of the preceding claims, **characterized in that** the acquisition from the at least two perspectives is selected so as to produce a composite image with at least two mutually overlapping images in which finally all of the acquired points are imaged from at least two perspectives.

9. Method according to Claim 8, **characterized in that** a composite image with a plurality of images from different perspectives with the same or different step width is recorded and evaluated in a joint process.

10. Method according to one of the preceding claims, **characterized in that** the sequential acquisition is carried out with stepwise or continuous change in the position and/or direction of the measuring device (20), and **in that** the image data obtained in the process are either completely evaluated, or are reduced by the evaluation system as a function of the accuracy to be ensured.

11. Method according to one of the preceding claims, **characterized in that** the acquisition of the images is performed automatically or through initiation by an operator.

12. Method according to one of the preceding claims, **characterized in that** a plurality of images are recorded from the same or different perspectives for various lighting conditions, in particular lighting intensity.

13. Method according to Claim 12, **characterized in that** the image coordinates of the test features (12.1) and/or of the reference features (12) are averaged after multiple acquisition from one perspective.

14. Method according to one of the preceding claims, **characterized in that** 2D surfaces or 3D bodies of known geometry are used as test features.

15. Method according to one of the preceding claims, **characterized in that** the test features (12.1) are designed to be reflective or luminescent.

16. Method according to one of the preceding claims, **characterized in that** during operation the operator is assisted visually and/or acoustically by means of the evaluation device.

17. Method according to one of the preceding claims, **characterized in that** the acquired images or the acquired composite image are/is evaluated using a statistical compensation method in order to determine the measuring site coordinates of the reference features (11).

18. Method according to one of the preceding claims, **characterized in that**, after having been determined, the measuring site coordinates of the reference features (11) are subjected to a plausibility test by means of the evaluation device (30), and the determined measuring site coordinates are not adopted as basis for the chassis measurement until the criteria on which the plausibility test is based are found to be applicable.

19. Device for carrying out the method according to one or more of the preceding claims, with a measuring arrangement, having at least one measuring device (20), which has one or more image pickup devices assigned to one another in position and attitude for the purpose of pictorial recording of the surface geometry of a vehicle or measurement points arranged on the vehicle, and comprises reference features (11) at specific measuring site coordinates in order to reference and/or orientate the at least one measuring device (20) with reference to the measuring site (1), and which further comprises an evaluation device (30) with the aid of which chassis data can be determined on the basis of obtained orientation data and/or assignment data and on the basis of the measured data obtained in carrying out the axle measurement, there being provided in addition at least one test feature arrangement (12) which comprises a carrier (12.2) with test features (12.1) arranged thereon, **characterized in that** the carrier (12.2) with the test features (12.1) can be pictorially acquired from at least two perspectives sequentially by the at least one measuring device (20), this being done by changing at least once the position and/or alignment of the at least one measuring device (20) and performing the at least one further acquisition from another perspective, and **in that** the evaluation device (30) is designed so that the measuring site coordinates of the reference features (11) can be determined on the basis of the test features (12.1) jointly recorded pictorially from at least two different perspectives, and of the reference features (11) to be measured.

## Revendications

1. Procédé de mesure optique du châssis de véhicules automobiles au moyen d'un agencement de mesure comportant au moins un dispositif de mesure (20), dans lequel un référencement et/ou une orientation de l'au moins un dispositif de mesure (20) par rapport à l'emplacement de mesure est réalisé à l'aide des caractéristiques de référence (11) présentes ou disposées au niveau de l'emplacement de mesure (1) à des coordonnées d'emplacement de mesure déterminées, avec un ou plusieurs dispositifs de prise d'image associés les uns aux autres au niveau de la position et de l'emplacement et détectant les formes géométriques superficielles d'un véhicule ou de points de mesure disposés au niveau du véhicule et dans lequel une analyse servant à déterminer les données de châssis se produit dans un dispositif d'analyse (30) sur la base des données d'orientation et/ou des données d'association acquises ainsi que des données de mesure acquises lors de la réalisation de la mesure d'essieu, les coordonnées d'emplacement de mesure des caractéristiques de référence (11) étant mesurées une fois ou à intervalles donnés au moyen d'un agencement de caractéristique de contrôle (12) prédéfini, avec des caractéristiques de contrôle (12.1), au niveau de l'emplacement de mesure (1), l'agencement de caractéristique de contrôle (12) étant détecté de façon imagée à partir d'au moins deux perspectives différentes à l'aide de l'au moins un dispositif de mesure (20), les caractéristiques de référence (11) à mesurer se trouvant en outre sur les représentations, **caractérisé en ce que** la combinaison d'au moins une partie des caractéristiques de contrôle (12.1) et des caractéristiques de référence (11) concernées est détectée séquentiellement en modifiant au moins une fois la position et/ou l'orientation de l'au moins un dispositif de mesure (20) et en effectuant au moins une détection supplémentaire à partir d'une autre perspective et que les positions des caractéristiques de contrôle (12.1) et des caractéristiques de référence (11) détectées conjointement à l'aide du dispositif de mesure forment des observations dans un système d'équation dont les inconnues sont déterminées à l'aide du dispositif d'analyse (30), par le biais d'un processus de compensation.

2. Procédé selon la revendication 1, **caractérisé en ce qu'**au moins une partie des caractéristiques de contrôle (12.1) de l'agencement de caractéristique de contrôle (12) est maintenue dans une position définie dans l'espace au niveau d'un support (12.2) mobile ou fixe d'un système de coordonnées 2D ou 3D local.

3. Procédé selon la revendication 1 ou 2, **caractérisé en ce que** les caractéristiques de contrôle (12.1) et/ou les caractéristiques de référence (11) sont identifiées à l'aide d'un codage associé.

4. Procédé selon l'une quelconque des revendications précédentes, **caractérisé en ce que** les caractéristiques de contrôle (12.1) sont détectées depuis deux côtés opposés, au moins trois des caractéristiques de contrôle (12.1) des deux côtés étant reliées entre elles de façon univoque.

5. Procédé selon l'une quelconque des revendications précédentes, **caractérisé en ce que** des informations géométriques des caractéristiques de contrôle (12.1) relatives à la forme, au système de coordonnées et/ou à la distance mutuelle sont en outre intégrées dans le processus de compensation.

6. Procédé selon l'une quelconque des revendications précédentes, **caractérisé en ce que** des paramètres supplémentaires sont ajoutés dans le processus de compensation, par exemple les paramètres de caméra ou les paramètres de l'association mutuelle de plusieurs unités de prise d'image d'un dispositif de mesure.

7. Procédé selon l'une quelconque des revendications précédentes, **caractérisé en ce que** l'agencement de caractéristique de contrôle (12) est utilisé dans le cas d'un agencement de mesure doté d'un dispositif de mesure (20) par roue ou par côté de véhicule afin de relier les caractéristiques de référence (11) d'un côté de l'avant vers l'arrière et/ou d'un côté du véhicule vers l'autre.

8. Procédé selon l'une quelconque des revendications précédentes, **caractérisé en ce que** la détection sélectionnée s'effectue à partir d'au moins deux perspectives de façon à obtenir un assemblage d'images contenant au moins deux images se recouvrant dans lequel tous les points détectés sont représentés en définitive à partir d'au moins deux perspectives.

9. Procédé selon la revendication 8, **caractérisé en ce qu'**un assemblage d'images constitué de plusieurs images provenant de perspectives différentes avec le même incrément ou un incrément est pris et analysé au cours d'un processus commun.

10. Procédé selon l'une quelconque des revendications précédentes, **caractérisé en ce que** la détection séquentielle est réalisée par un changement de position et/ou de direction graduel ou continu du dispositif de mesure (20) et que les données d'image ainsi acquises sont soient analysées dans leur totalité soient réduites par le système d'analyse en fonction de la précision à garantir.

11. Procédé selon l'une quelconque des revendications précédentes, **caractérisé en ce que** la détection des images est soit réalisée automatiquement soit par déclenchement par une personne utilisatrice.

12. Procédé selon l'une quelconque des revendications précédentes, **caractérisé en ce que** plusieurs images prises dans la même perspective ou selon une perspective différente sont prises avec différents rapports d'éclairage, notamment une puissance d'éclairage différente.

13. Procédé selon la revendication 12, **caractérisé en ce que** les coordonnées d'image des caractéristiques de contrôle (12.1) et/ou des caractéristiques de référence (12) sont moyennées après détection multiple à partir d'une perspective.

14. Procédé selon l'une quelconque des revendications précédentes, **caractérisé en ce que** les caractéristiques de contrôle utilisées sont des surfaces 2D ou des corps 3D de forme géométrique connue.

15. Procédé selon l'une quelconque des revendications précédentes, **caractérisé en ce que** les caractéristiques de contrôle (12.1) sont réalisées de façon réfléchissante ou autoéclairée.

16. Procédé selon l'une quelconque des revendications précédentes, **caractérisé en ce que** la personne utilisatrice est aidée de façon visuelle et/ou sonore par le dispositif d'analyse lors de l'utilisation du dispositif.

17. Procédé selon l'une quelconque des revendications précédentes, **caractérisé en ce que** les images détectées ou l'assemblage d'images détectées est analysé pour déterminer les coordonnées d'emplacement de mesure des caractéristiques de référence (11) selon un procédé de compensation statistique.

18. Procédé selon l'une quelconque des revendications précédentes, **caractérisé en ce qu'**après détermination des coordonnées d'emplacement de mesure des caractéristiques de référence (11), celles-ci sont soumises à un contrôle de plausibilité par le dispositif d'analyse (30) et que les coordonnées d'emplacement de mesure calculées sont seulement reprises comme position de base pour la mesure du châssis lorsque les critères servant de base au contrôle de plausibilité sont considérés comme pertinents.

19. Dispositif de mise en oeuvre du procédé selon l'une quelconque des revendications précédentes ou plusieurs d'entre elles, avec un agencement de mesure comportant au moins un dispositif de mesure (20) comportant un ou plusieurs dispositifs de prise d'image associés entre eux au niveau de la position et de l'emplacement pour prendre de façon imagée les formes géométriques superficielles d'un véhicule ou de points de mesure disposés au niveau du véhicule et comprenant des caractéristiques de référence (11) prévues à des coordonnées d'emplacement de mesure déterminées pour référencer et/ou orienter l'au moins un dispositif de mesure (20) par rapport à l'emplacement de mesure (1) et comprenant en outre un dispositif d'analyse (30) à l'aide duquel des données de châssis peuvent être déterminées sur la base des données d'orientation et/ou des données d'association acquises ainsi que des données de mesure acquises lors de la réalisation de la mesure d'essieu, au moins un agencement de caractéristique de contrôle (12) étant en outre prévu lequel comprend un support (12.2) avec des caractéristiques de contrôle (12.1) associées, **caractérisé en ce que** le support (12.2) peut être détecté de façon imagée de façon séquentielle par l'au moins un dispositif de mesure (20) à partir d'au moins deux perspectives, à l'aide des caractéristiques de contrôle (12.1), en modifiant au moins une fois la position et/ou l'orientation de l'au moins un dispositif de mesure (20) et en réalisant l'au moins une détection supplémentaire à partir de l'autre perspective et que le dispositif d'analyse (30) est réalisé de façon à ce que les coordonnées d'emplacement de mesure des caractéristiques de référence (11) peuvent être déterminées sur la base des caractéristiques de contrôle (12.1) prises de façon imagée à partir d'au moins deux perspectives différentes et des caractéristiques de référence (11) à mesurer.
